(19) **Europäisches Patentamt**

**European Patent Office**

**Office européen des brevets**

(11) **EP 1 166 503 B1**

(12) **EUROPEAN PATENT SPECIFICATION**

(45) Date of publication and mention
of the grant of the patent:
**21.06.2006 Bulletin 2006/25**

(51) Int Cl.:
***H04L 12/28*** (2006.01)

(21) Application number: **00920995.8**

(22) Date of filing: **07.04.2000**

(86) International application number:
**PCT/IB2000/000609**

(87) International publication number:
**WO 2000/060796 (12.10.2000 Gazette 2000/41)**

(54) **ORDERING OF LONG TRANSPORT CHANNELS AND SHORT TRANSPORT CHANNELS**

ANORDNUNG VON LANG- UND KURZ-ÜBERTRAGUNGSKANÄLEN

L'ORDONNANCEMENT DE VOIES DE TRANSPORT LONGUES ET DE VOIES DE TRANSPORT COURTES

(84) Designated Contracting States:
**DE FR GB**

(30) Priority: **07.04.1999 US 128042 P**
**07.04.2000 US 544219**

(43) Date of publication of application:
**02.01.2002 Bulletin 2002/01**

(73) Proprietor: **TELEFONAKTIEBOLAGET LM ERICSSON (publ)**
**164 83 Stockholm (SE)**

(72) Inventors:
• **LINDSKOG, Jan**
 **S-435 43 Pixbo (SE)**
• **OLSSON, Jonas**
 **S-413 11 Goteborg (SE)**
• **MALMGREN, Goran**
 **S-129 35 Hagersten (SE)**
• **MIKLOS, Gyorgy**
 **H-1045 Budapest (HU)**

(74) Representative: **HOFFMANN EITLE**
**Patent- und Rechtsanwälte**
**Arabellastrasse 4**
**81925 München (DE)**

(56) References cited:
 **EP-A- 0 707 394          WO-A-99/11012**

**Description**

**FIELD OF INVENTION**

The present invention relates to the field of wireless local area network (LAN) communication, and more particularly, to the use of Automatic Repeat Request (ARQ) to convey protocol data unit (PDU) reception status information between a sending entity and a receiving entity in the LAN, and to facilitate the retransmission of PDUs, when retransmission is required.

**BACKGROUND**

The new standard for wireless LAN services is known as ETSI HIPERLAN Type 2. The high throughput capability associated with HIPERLAN Type 2 is expected to open new opportunities for both existing applications and new applications.

HIPERLAN Type 2 uses a Time Division Duplex (TDD) scheme, wherein an access point (AP) and a mobile terminal (MT) use different time slots over the same frequency channel to communicate with one another.

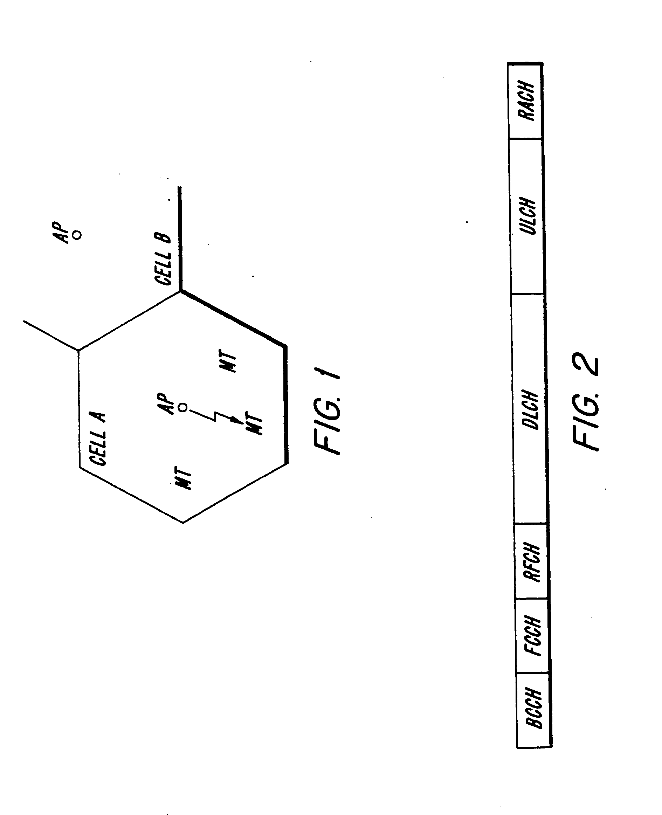

Figure 1 illustrates a portion of a typical HIPERLAN Type 2 system, wherein the APs are connected to the Operator's Intranet. The MTs, however, may serve as wireless network interface cards (NICs) to a personal computer (PC), or they may be mobile telephones. Each of the cells in HIPERLAN Type 2, for example, cell A and cell B, may be self-configured in that the AP in each cell will automatically select the most effective frequencies using measurements it has taken regarding the interference level at other frequencies, as well as measurements received from the MTs operating in the cell.

The Medium Access Control (MAC) protocol used by HIPERLAN Type 2 is a reservation based protocol. Figure 2 provides an overview of a typical MAC protocol frame structure. As shown, a typical MAC frame includes a broadcast control channel (BCCH), a frame control channel (FCCH), a random access feedback channel (RFCH), a downlink (DL) channel (DLCH), an uplink (UL) channel (ULCH), and a random access channel (RACH).

Assuming a MT has been authenticated and a connection has been established between the MT and a corresponding AP, the MT monitors the BCCH for random access opportunities (i.e., time slot availability). The MT must then request UL resources via the RACH. Thereafter, the AP acknowledges the request and starts scheduling UL resources for the MT, i.e., the scheduler begins reserving UL resources for the MT. The RFCH conveys to the MT information which the MT can use to determine if its request for resources in the RACH of the previous MAC frame was successfully transmitted to and received by the AP.

Upon receiving DL data from the network, the AP either buffers the data and defers transmission, if the MT is "sleeping, " or the AP transmits the data at the next possible opportunity. Data is announced by broadcasting the MT's MAC-ID in the FCCH. The FCCH also contains the exact location (i.e., time slot) of the data in the DLCH.

The MAC protocol supports three data service modes: acknowledged mode, unacknowledged mode and repetition mode. The acknowledged data service mode, in particular, provides error-free delivery of service data units (SDU), in both the UL and DL directions, wherein the sender has the ability to discard PDUs depending on channel quality. Error correction is achieved by employing an Automatic Repeat Request (ARQ) mechanism, where ARQ PDU reception status acknowledgments are sent from the intended receiving entity to the sending entity in a reverse data flow direction, as one skilled in the art will readily appreciate.

Further in accordance with the MAC protocol, user data is sent in long transport channels (LCHs), whereas short transport channels (SCHs) are used to send ARQ PDU reception status acknowledgments, as well as other messages, such as resource request messages, which reflect the number of pending PDUs in the UL direction for a given MT. As one skilled in the art will readily appreciate, a NIC may simultaneously support multiple user connections, wherein the SCHs and the LCHs for any one of the multiple connections are arranged such that the SCHs are transmitted prior to the LCHs. Moreover, the SCHs and the LCHs associated with each connection are concatenated in the UL and DL channels to form a PDU chain, comprising a SCH portion, LCH portion pair, which is herein referred to as a SCH/LCH pair, where the SCH portion may contain one or more SCHs and the LCH portion may contain one or more LCHs. For example, a PDU train associated with a NIC that is supporting two connections may be represented as follows: $SCHs_1$ - $LCHs_1$ - $SCHs_2$ - $LCHs_2$, where the subscript "1" denotes a first of the two connections and the subscript "2" denotes a second of the two connections.

A DL or UL PDU train is decoded by the MT or the AP respectively, and PDU reception status is stored in an ARQ table. Based on opportunities provided by the scheduler, the MT and/or AP create an ARQ status acknowledgment message(s) that reflects the PDU reception status in the ARQ table. The ARQ message(s) is then sent as a SCH PDU (s) to the sender via the UL, if the sender is the AP, or via the DL if the sender is a MT. The sender then analyzes the PDU reception status information contained in the ARQ message, and if appropriate, the sender retransmits one or more of the PDUs that were not successfully received.

A short retransmission turnaround time (RTT), where RTT refers to the amount of time required (e.g., in terms of a number of frames) to retransmit a PDU, is highly beneficial for many reasons. In general, a short RTT means shorter transmission delays and/or additional PDU retransmission opportunities for delay sensitive applications, such as real-time video or voice applications. Short RTT also means faster reaction upon changes in channel quality. It also means a decrease in memory requirements.

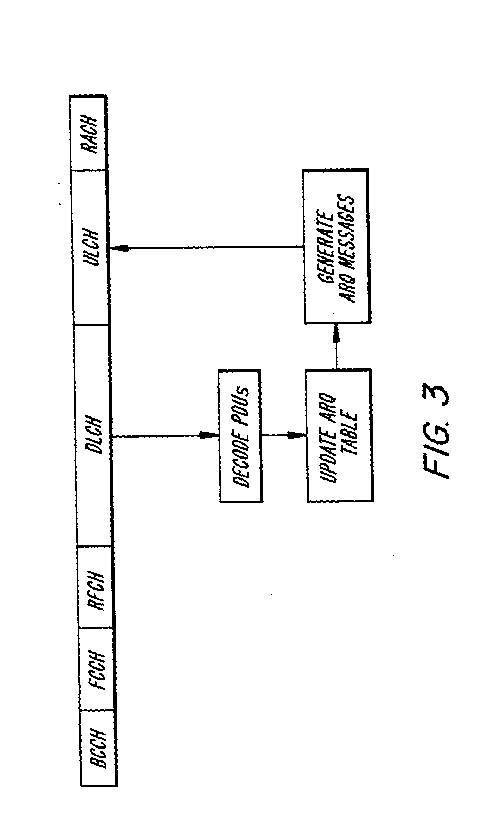

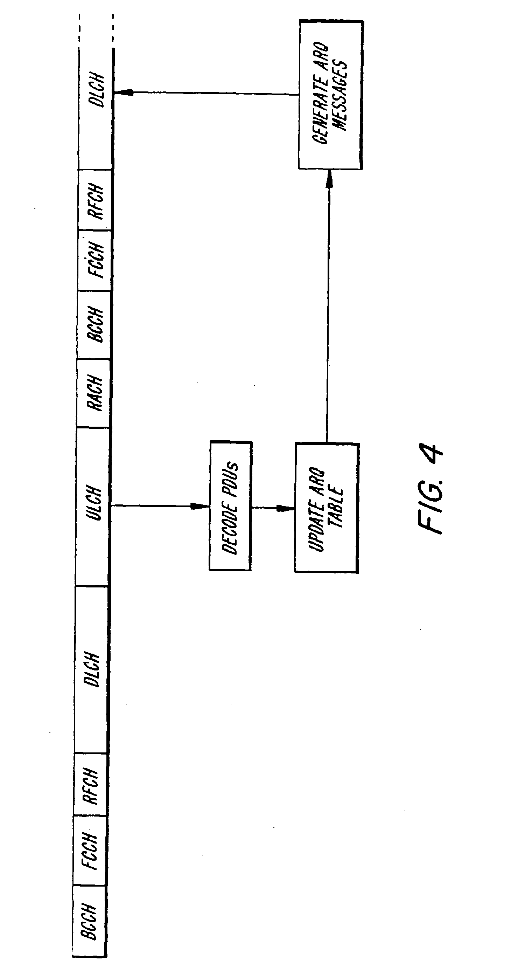

In order to achieve a short RTT, both the amount of time required to send ARQ status acknowledgment messages and the time required by the scheduling entity to schedule the retransmission of any PDUs should be minimized. Minimizing RTT depends, to some extent, on the order in which the DL and UL channels appear in the MAC frame relative to each other. For instance, the DLCH may precede the ULCH. In this instance, it is desirable to transmit the ARQ status acknowledgment for DL traffic in the same MAC frame as the DL data to which it corresponds, as illustrated in Figure 3, in order to minimize RTT. With respect to ARQ status acknowledgments for UL data traffic, it is desirable to transmit the ARQ status acknowledgment message in the DLCH of the very next MAC frame, as illustrated in Figure 4. In another instance, the ULCH may precede the DLCH. In the case, just the opposite is true with respect to transmitting ARQ status acknowledgment.

Of the two instances described above, it is far more preferable that the DLCH precede the ULCH in a given MAC frame. The reason for this is that each MT must monitor the FCCH, which follows the BCCH in the MAC frame structure, wherein the FCCH contains information elements which indicate the composition of the MAC frame. By locating the DLCH prior to the ULCH, a MT can buffer all incoming DL data, while it processes the content of the FCCH. In doing so, the processing of the DL data can be deferred in order to determine when the uplink transmission is to begin. The opposite is not possible if the ULCH is located prior to the DLCH since the UL transmission cannot be delayed.

In the scenario depicted in Figure 4, the duration of time covering the RACH, BCCH, FCCH and RFCH is presumed to be sufficient in order to generate ARQ status acknowledgments for an ARQ implementation in hardware. However, with respect to the case reflected in Figure 3, the time period between receipt of the last DL PDU and the time the ARQ status acknowledgment message is sent in an ULCH SCH PDU may not be sufficient. More specifically, since the location of a SCH/LCH pair in the ULCH for a given connection is arbitrary, the probability exists that the time needed to generate corresponding ARQ messages is insufficient. Again, the opposite problem arises when the ULCH is located prior to the DLCH during the same MAC frame.

The same type of problem occurs with respect to the transmission of incorrectly received PDUs announced in the ARQ status acknowledgment message. For the case where the DLCH precedes the ULCH, the presence of a SCH may include an ARQ acknowledgment message. Since the location of the SCH in the DLCH relative to the LCH in the ULCH is arbitrary when the DLCH precedes ULCH, the amount of time available for the MT to decode PDUs in the DLCH, update the ARQ table, and, if necessary, generate and retransmit ARQ messages may be insufficient. The opposite problem may arise when the ULCH precedes the DLCH, depending on whether the scheduler has scheduled DL LCH PDUs at the beginning of the DLCH phase of the frame. Since the scheduler is unaware of the content of the ARQ status acknowledgment message to be sent in the ULCH at the creation of the frame, the amount of time needed by the AP to decode PDUs in the ULCH, update the ARQ table, and, if necessary, generate and retransmit ARQ messages may be insufficient.

According to WO9911012 a first entity transmits a group of frames addressed to a second entity over a wireless communications medium, concluding with a last frame indicating an end to the group of frames. A frame from the transmitted group is received at the second entity. A frame is then transmitted from the second entity which indicates reception of a frame from the transmitted group of frames, in response to reception of the last frame at the second entity or expiration of a predetermined time interval, preferably in response to the earlier of reception of the last frame at the second entity and expiration of a predetermined time interval after first receiving a frame from the transmitted group of frames at the second entity. The first entity preferably refrains from transmitting frames addressed to the second entity from the first entity until the frame which indicates reception of a frame from the transmitted group of frames is received at the first entity. Preferably, a single frame is transmitted to indicated reception of all frames from the transmitted group of frames which are received by the second entity. Preferably, the second entity has an active mode in which the second entity is continuously operable to receive frames transmitted by the station and a standby mode in which the second entity is intermittently operable to receive frames transmitted by the station to thereby consume less power than in the active mode, and the frame which indicates reception of a frame requests the standby mode. In response to reception of the request, a frame may be communicated from the first entity to the second entity commanding the second entity to the active mode or the standby mode.

In **EP0707394** meanwhile, an SR (Selective Repeat) ARQ system with limited buffer memory is realized by modifying a part of a user data area. A transmitter side modifies a part of a user data area in a data frame so that it differs at least one bit from corresponding part of a frame with the same frame number as that of a current frame in a preceding modulo, and a receiver side compares said part of a user data area with corresponding part of a frame with the same frame number as that of a current frame in a preceding modulo. When they coincide, the receiver side disregards the received frame as it is re-transmitted frame which is already received correctly, and when they do not coincide, the receiver side takes the received frame. Preferably, said part of a user data area is the last word area in a user data area in a frame structure.

## SUMMARY OF THE INVENTION

According to the present invention there is provided a medium access control data structure for use in a wireless LAN according to the appended independent Claim 1. Preferred embodiments are defined in the dependent claims.

## BRIEF DESCRIPTION OF THE DRAWINGS

These and other objects, features and advantages of the present invention will be readily apparent to one skilled in the art from the following written description, read in conjunction with the drawings, in which:

Fig. 1 illustrates an exemplary portion of a typical HIPERLAN Type 2 system;
Fig. 2 illustrates a typical medium access control (MAC) protocol frame structure;
Fig. 3 illustrates the generation and transmission of an automatic repeat request (ARQ) message for a DL PDU;
Fig. 4 illustrates the generation and transmission of an ARQ message for an UL PDU;
Fig. 5 illustrates a MAC frame structure in accordance with a preferred embodiment of the present invention, wherein the ULCH follows the DLCH; and
Fig. 6 illustrates a MAC frame structure in accordance with an alternative embodiment, wherein the DLCH follows the ULCH.

## DETAILED DESCRIPTION OF THE INVENTION

In the following description, for purposes of explanation and not limitation, specific details are set forth, such as particular frame protocols, frame structures, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and frame structures are omitted so as not to obscure the description of the present invention.

The scheduling of LCH and SCH PDUs is provided for based on an awareness of a desired ARQ response time. Accordingly, the MTs and APs are afforded a maximum amount of time to generate ARQ messages, while still achieving a fast response time. In general, for the more preferable case where the DLCH precedes the ULCH, the amount of time that is available to generate ARQ messages may be maximized by having the SCH portion follow the LCH portion in the one or more LCH/SCH pairs in the ULCH of the MAC frame. In the less preferable case, where the ULCH precedes the DLCH, the amount of time that is available to generate ARQ messages may be maximized by having the SCH portion follow the LCH portion in the one or more LCH/SCH pairs in the DLCH of the MAC frame.

It should be noted that both the AP and the MTs, at association time, announce any extra processing delay for both the send and receive directions. This delay is expressed in terms of a number of MAC frames. Therefore, the extra processing delay in the send direction (i.e., denoted by $d_{tx,AP}$ and $d_{tx,MT}$) defines the number of MAC frames before the sender can transmit PDUs based on the processing of an ARQ message after reception of the ARQ message. The extra processing delay in the receive direction (i.e., denote by $d_{rx,AP}$ and $d_{rx,MT}$) defines the number of MAC frames that the receiver must wait before it can produce an ARQ message following the successful or unsuccessful receipt of PDUs. The "round-trip" time in the uplink and downlink directions may be expressed, in terms of a number of frames, as follows.

$$RTT_{uplink} = d_{tx,MT} + d_{rx,AP} + 1$$

$$RTT_{downlink} = d_{rx,MT} + d_{tx,AP} + 1$$

In accordance with a first exemplary embodiment maximizing the amount of time required to generate an ARQ message without compromising response time is achieved through a MAC protocol data structure that includes a first channel for communicating information from a first communication entity to a second communication entity, where the first channel contains a plurality of LCH/SCH pairs, where each LCH/SCH pair is associated with a corresponding connection between the first and second communication entities, each of the LCH/SCH pairs including a SCH portion for conveying ARQ messages and a LCH portion for conveying user data, and where the LCH portion precedes the SCH portion. The MAC protocol data structure also includes a second channel for communicating information from the second communication entity to the first communication entity, where the second channel precedes the first channel, and the second channel contains a plurality of SCHs, each of which conveys an ARQ message from the second communication entity to the first communication entity.

In accordance with a second exemplary embodiment maximizing the amount of time required to generate an ARQ message without compromising response time is achieved through a MAC protocol data structure that includes an ULCH containing a LCH/SCH pair associated with a connection between an AP and a MT, where the LCH/SCH pair includes an SCH portion containing one or more SCHs that convey, for example, ARQ messages, and where the LCH/SCH pair further includes an LCH portion containing one or more LCHs that convey user data, and where the LCH portion precedes the SCH portion. In addition, the MAC protocol data structure includes a DLCH that precedes the ULCH, where the DLCH contains a SCH/LCH pair associated with the connection between the AP and the MT, where the SCH/LCH pair includes an SCH portion to convey, for example, ARQ messages and an LCH portion to convey user data, and where the SCH portion precedes the LCH portion.

In accordance with a third exemplary embodiment maximizing the amount of time required to generate an ARQ message without compromising response time is achieved through a MAC protocol data structure that includes a DLCH containing a LCH/SCH pair associated with a connection between an AP and a MT, where the LCH/SCH pair includes an LCH portion containing one or more LCHs for conveying user data and an SCH portion containing one or more SCHs for conveying ARQ messages, and where the LCH portion precedes the SCH portion. In addition, the MAC protocol data structure includes an ULCH that precedes the DLCH, where the ULCH contains an SCH/LCH pair associated with the connection between the AP and the MT, where the SCH/LCH pair includes an SCH portion for conveying ARQ messages and an LCH portion for conveying user data, and where the SCH portion precedes the LCH portion.

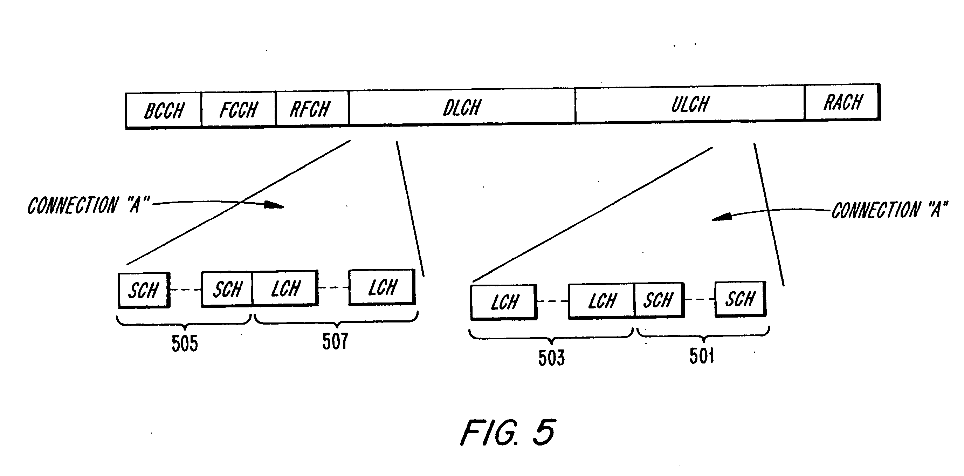

In accordance with a preferred embodiment of the present invention, the DLCH precedes the ULCH in the MAC frame structure, as illustrated in Figure 5. In accordance with the preferred embodiment, the scheduler, in general, allocates an ARQ feedback space (i.e., one or more time slots) in the ULCH, $d_{rx,MT}$ frames after the transmission of a corresponding DL LCH PDU(s). Similarly, the scheduler allocates an ARQ feedback space (i.e., one or more time slots) in the DLCH, $d_{rx,AP}$ frames after the transmission of a corresponding UL LCH PDU(s).

Further in accordance with the preferred embodiment, and with specific reference to the ULCH as illustrated in FIG. 5, the SCH portion 501 of the LCH/SCH pair associated with a given connection, for example, connection "A" , is arranged such that it follows the LCH portion 503. In doing this, additional time is available for the MT to generate and ultimately transmit ARQ status acknowledgement messages in the present MAC frame. This is particularly important with regard to "time critical" connections (i.e., connections having a response time of $d_{tx,MT}$ equal to zero). The additional time that is made available to the MT as a result of this arrangement is at least equal to the time associated with the generation of the corresponding LCH portion 503 in the ULCH.

In FIG. 5, the LCH/SCH pair associated with only one connection (i.e., connection "A") is shown. However, as stated previously, a NIC in a single MT may support multiple connections. Thus, the ULCH may contain multiple LCH/SCH pairs, where each is associated with a different one of the multiple connections. In accordance with the preferred embodiment of the present invention, the scheduler reserves the earliest time slots in the ULCH for those LCH/SCH pairs that are associated with non-time critical connections (i.e., connections having a response time ($d_{rx,MT}$) that is greater than zero MAC frames. Thus, the latter time slots in the ULCH may be reserved for those LCH/SCH pairs that are associated with time critical connections, where DL data associated with these time critical connections was present in the DLCH of the present MAC frame. Consequently, there is more time available for the MT to decode DL PDUs, update the ARQ status table, generate, if necessary, ARQ status acknowledgment messages and retransmit PDUs, particularly for time critical connections.

Still further in accordance with the preferred embodiment of the present invention, the scheduler reserves time slots in the ULCH for those LCH/SCH pairs that are associated with time critical connections in such a way that the order in which these LCH/SCH pairs appear in the ULCH is the same as the order associated with the corresponding SCH/LCH pairs in the DLCH. Thus, for example, if three connections A, B and C associated with a MT are deemed to be time critical connections and the order in which the corresponding SCH/LCH pairs appear in the DLCH is as follows: $SCH/LCH_A$- $SCH/LCH_B$- $SCH/LCH_C$, then the order in which the corresponding LCH/SCH pairs appear in the ULCH is: $LCH/SCH_A$ - $LCH/SCH_B$ - $LCH/SCH_C$. As one skilled in the art will readily appreciate, this further increases the probability that there will be sufficient time available for the AP and MT to decode PDUs, update the ARQ status table, generate, if necessary, ARQ status acknowledgment messages and retransmit PDU(s) for time critical connections.

With reference now to the DLCH of the present MAC frame illustrated in FIG. 5, the SCH portion 505 of the SCH/LCH pair associated with connection "A" precedes the LCH portion 507. This increases the amount of time that the MT has to receive an ARQ message from the AP, indicating that a particular PDU should be retransmitted, and if necessary, retransmit the PDU in the ULCH of the present MAC frame.

If bandwidth is scheduled for retransmission of PDUs only, the bandwidth may be unused. But for occasions where UL data is pending, the scheduler will not jeopardize the bandwidth by allocating ULCH LCH PDUs.

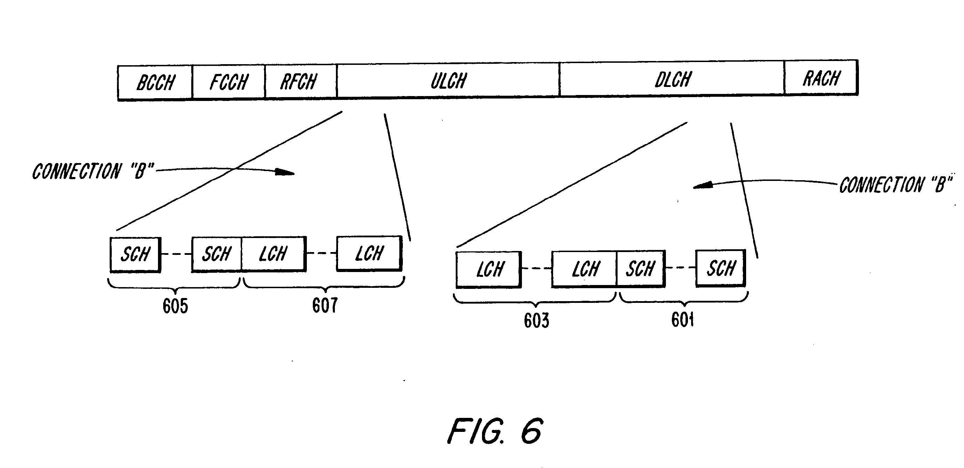

FIG. 6 illustrates an alternative embodiment of the present invention, which covers the less likely instance where the ULCH precedes the DLCH in the MAC frame. In accordance with this alternative embodiment, the scheduler, in general, allocates an ARQ feedback space (i.e., one or more time slots) in the DLCH, $d_{rx,AP}$ frames after the transmission of a corresponding UL LCH PDU(s). Similarly, the scheduler allocates an ARQ feedback space (i.e., one or more time slots) in the ULCH, $d_{rx,MT}$ frames after the transmission of a corresponding DL LCH PDU(s).

Further in accordance with this alternative embodiment, and with specific reference to the DLCH illustrated in FIG. 6, the SCH portion 601 of the LCH/SCH pair associated with a given connection, for example, connection "B", is arranged such that it follows the LCH portion 603. In doing this, additional time is available for the AP to generate and ultimately transmit ARQ status acknowledgement messages to the MT during the present MAC frame. Again, this is particularly important with regard to "time critical" connections. The additional time that is made available to the AP as a result of this arrangement is at least equal to the time associated with the generation of the corresponding LCH portion 603 in the DLCH.

The DLCH may, of course, contain multiple LCH/SCH pairs, where each corresponds with a different connection between the AP and the MT. In accordance with the alternative embodiment of the present invention, the scheduler reserves the earliest time slots in the DLCH for those LCH/SCH pairs that are associated with non-time critical connections. Thus, the latter time slots in the DLCH may be reserved for those LCH/SCH pairs that are associated with time critical connections, where UL data associated with these time critical connections was present in the ULCH of the present MAC frame. Consequently, there is more time available for the AP to decode UL PDUs, update the ARQ status table, and generate, if necessary, ARQ status acknowledgment messages, particularly for time critical connections.

With specific reference now to the ULCH illustrated in FIG. 6, the SCH portion 605 of each SCH/LCH pair precedes the corresponding LCH portion 607. This, of course, increases the amount of time that is available for the AP to decode an ARQ status acknowledgement message in the ULCH and, if necessary, retransmit the appropriate PDU to the MT in the DLCH of the present MAC frame. Again, this is particularly important with regard to "time critical" connections.

Still further in accordance with the alternative embodiment, the scheduler reserves time slots in the ULCH for those SCH/LCH pairs that are associated with time critical connections in such a way that the order in which these SCH/LCH pairs appear in the ULCH is the same as the order associated with the corresponding LCH/SCH pairs in the DLCH of the previous MAC frame. Thus, for example, if three connections D, E and F are deemed to be time critical connections and the order in which the LCH/SCH pairs appear in the DLCH of the previous MAC frame is as follows: $LCH/SCH_D$ - $LCH/SCH_E$ - $LCH/SCH_F$, then the order in which the corresponding SCH/LCH pairs appear in the ULCH of the present MAC frame is as follows: $SCH/LCH_D$ - $SCH/LCH_E$ - $SCH/LCH_F$. As one skilled in the art will readily appreciate, this further increases the probability that there will be sufficient time available for the AP and MT to decode PDUs, update the ARQ status table, generate, if necessary, ARQ status acknowledgment messages and retransmit PDUs for time critical connections.

If bandwidth is scheduled for retransmission of PDUs only, the bandwidth may be unused. But for occasions where DL data is pending, the scheduler will not jeopardize the bandwidth by allocating DLCH LCH PDUs. Since the required time probably is well known by the vendor of the AP, and since the scheduler and the ARQ are located in the same unit, this problem can be avoided.

It should be noted that exemplary methods of the present invention are not limited to application described above. The present invention has been described in terms of specific embodiments to facilitate understanding. The above embodiments, however, are illustrative rather than restrictive. It will be readily apparent to one skilled in the art that departures may be made from the specific embodiments shown above.

Therefore, the invention should not be regarded as being limited to the above examples, but should be regarded instead as being fully commensurate in scope with the following claims.

**Claims**

1. A Medium Access Control, hereafter referred to as MAC, protocol data structure for use in a wireless LAN, wherein user data is transported between a first communication entity and a second communication entity in accordance with a MAC protocol, said data structure comprising:

   a first channel for communicating information from the first communication entity to the second communication entity, said first channel containing a plurality of long channel, thereafter referred to as LCH (503), short channel, hereafter referred to as SCH (501), pairs, wherein each LCH/SCH pair is associated with a corresponding connection between the first and second communication entities, each of said LCH/SCH pairs including a SCH portion for conveying Automatic Repeat Request, hereafter referred to as ARQ, messages and a LCH portion for conveying user data, and wherein the LCH portion precedes the SCH portion: and

a second channel for communicating information from the second communication entity to the first communication entity, said second channel preceding the first channel in the MAC protocol data structure, said second channel containing a plurality of SCHs (505), each of which conveys an ARQ message from the second communication entity to the first communication entity.

2. The MAC protocol data structure of claim 1, wherein each of a first number of the LCH/SCH pairs in said first channel and each of a first number of the SCHs (505) in the second channel are associated with a time critical connection between the first and second communication entities.

3. The MAC protocol data structure of claim 2, wherein the order of said first number of LCH/SCH pairs in the first channel is the same as the order of said first number of corresponding SCHs (505) in the second channel.

4. The MAC protocol data structure of claim 1, wherein said second channel further comprises a plurality of SCH/LCH pairs, and wherein each of a first number of the SCH/LCH pairs in said second channel are associated with a time critical connection between the first and second communication entities.

5. The MAC protocol data structure of claim 4, wherein the order of said first number of SCH/LCH pairs is the same as a first number of corresponding LCH/SCH pairs in a first channel of a previous MAC frame.

6. The MAC protocol data structure of claim 1, wherein each of a second number of the SCH/LCH pairs in said second channel are associated with a non-time critical connection between the first and the second communication entities, and wherein the second number of SCH/LCH pairs precedes the first number of SCH/LCH pairs in said second channel.

7. The MAC protocol data structure of claim 1, wherein each of a first number of the LCH/SCH pairs in said first channel are associated with a time critical connection between the first and second communication entities, wherein each of a second number of the LCH/SCH pairs in said first channel are associated with a non-time critical connection between the first and the second communication entities, and wherein the second number of LCH/SCH pairs precedes the first number of LCH/SCH pairs in said first channel.

8. The MAC protocol data structure of any proceeding claim, wherein said first communication entity is an Access Point, hereafter referred to as AP, and wherein said second communication entity is a Mobile Terminal, hereafter referred to as MT, and wherein said first channel is an Uplink Channel, hereafter referred to as ULCH, and wherein said second channel is a Downlink Channel hereafter referred to as DLCH.

9. The MAC protocol data structure of claim 8, wherein said DLCH comprises a plurality of SCH/LCH pairs, each associated with one of a plurality of connections between the AP and the MT, and wherein said ULCH comprises a plurality of LCH/SCH pairs, each associated with a different one of the plurality of connections between the AP and the MT.

10. The MAC protocol data structure of claim 9, wherein each of the plurality of LCH/SCH pairs in the ULCH is associated with a corresponding one of the plurality of SCH/LCH pairs in the DLCH, and wherein the order of each LCH/SCH pair in the ULCH is the same as the order of the corresponding SCH/LCH pair in the DLCH.

11. The MAC protocol data structure of claim 9, wherein each of the plurality of SCH/LCH pairs in the DLCH is associated with a corresponding one of a plurality of SCH/LCH pairs in an ULCH of a previous MAC frame, and wherein the order of each LCH/SCH pair in the ULCH of the previous MAC frame is the same as the order of the corresponding SCH/LCH pair in the DLCH.

12. The MAC protocol data structure of claim 9, wherein each of a first number of the of SCH/LCH pairs in said DLCH and each of a corresponding number of LCH/SCH pairs in said ULCH are associated with a different time critical connection between the MT and the AP, and wherein each of a second number of the SCH/LCH pairs in said DLCH and each of a corresponding number of LCH/SCH pairs in said ULCH are associated with a different non-time critical connection between the MT and the AP.

**13.** The MAC protocol data structure of claim 12, wherein the order of the LCH/SCH pairs in the ULCH that are associated with the time critical connections is the same as the order of the corresponding SCH/LCH pairs in the DLCH that are associated with the time critical connections.

**14.** The MAC protocol data structure of claim 12, wherein the order of the SCH/LCH pairs in the DLCH that are associated with the time critical connections is the same as the order of a corresponding number of LCH/SCH pairs in an ULCH of a previous MAC frame.

**15.** The MAC protocol data structure of claim 12, wherein the LCH/SCH pairs in the ULCH that are associated with the non-time critical channels precede the LCH/SCH pairs in the ULCH that are associated with time critical connections.

**16.** The MAC protocol data structure of claim 12, wherein the SCH/LCH pairs in the DLCH that are associated with the non-time critical channels precede the SCH/LCH pairs in the DLCH that are associated with time critical connections.

**17.** The MAC protocol data structure of claim 12, wherein a time critical connection has a retransmission delay requirement of zero (0) MAC data frames.

**18.** The MAC protocol data structure of any of any Claims 8 to 17, wherein the LCH portion (603) of said Downlink Channel precedes the SCH portion (601) of said Downlink Channel, and where the SCH portion (605) of said Uplink Channel precedes the LCH. portion (607) of said Uplink Channel.

**Patentansprüche**

**1.** Eine Datenträgerzugangssteuerungs-, im folgenden MAC (Englisch: Medium Access Control) bezeichnet, Protokoll-Datenstruktur zur Verwendung in einem drahtlosen LAN, wobei Benutzerdaten zwischen einer ersten Kommunikationseinheit und einer zweiten Kommunikationseinheit nach einem MAC Protokoll überführt werden, wobei die Datenstruktur umfasst:

einen ersten Kanal zum Kommunizieren von Information von der ersten Kommunikationseinheit zu der zweiten Kommunikationseinheit, wobei der erste Kanal eine Vielzahl von Langkanal-, im folgenden als LCH (503) (Englisch: Long Channel) bezeichnet, Kurzkanal-, im folgenden als SCH (501) (Englisch: Short Channel) bezeichnet, Paare, wobei jedes LCH/SCH-Paar einer entsprechenden Verbindung zwischen der ersten und
zweiten Kommunikationseinheit zugeordnet ist, wobei jedes der LCH/SCH-Paare einen SCH-Bereich zum Übermitteln von automatischen Wiederholungsanforderungen, im folgenden als ARQ (Englisch: Automatic Repeat Request) bezeichnet, Mitteilungen und einen LCH-Bereich zum Übrmitteln von Benutzerdaten enthält, und wobei der LCH-Bereich dem SCH-Bereich vorangeht; und
einen zweiten Kanal zum Kommunizieren von Information von der zweiten Kommunikationseinheit zu der ersten Kommunikationseinheit, wobei der zweite Kanal dem ersten Kanal in der MAC Protokoll-Datenstruktur vorangeht, wobei der zweite Kanal eine Vielzahl von SCHs (505) enthält, von denen jedes eine ARQ Nachricht von der zweiten Kommunikationseinheit zu der ersten Kommunikationseinheit übermittelt.

**2.** Die MAC Protokoll-Datenstruktur nach Anspruch 1, wobei jedes einer ersten Anzahl von LCH/SCH Paaren im ersten Kanal und jedes einer ersten Anzahl der SCHs (505) im zweiten Kanal einer zeitkritischen Verbindung zwischen der ersten und zweiten Kommunikationseinheit zugeordnet ist.

**3.** Die MAC Protokoll-Datenstruktur nach Anspruch 2, wobei die Reihenfolge der ersten Anzahl der LCH/SCH-Paare im ersten Kanal die gleiche wie die Reihenfolge der ersten Anzahl der entsprechenden SCHs (505) im zweiten Kanal ist.

**4.** Die MAC Protokoll-Datenstruktur nach Anspruch 1, wobei der zweite Kanal ferner eine Vielzahl von SCH/LCH-Paaren umfasst und wobei jedes der ersten Anzahl der SCH/LCH-Paare im zweiten Kanal einer zeitkritischen Verbindung zwischen der ersten und zweiten Kommunikationseinheit zugeordnet ist.

**5.** Die MAC Protokoll-Datenstruktur nach Anspruch 4, wobei die Reihenfolge der ersten Anzahl der SCH/LCH-Paare die gleiche wie die erste Anzahl der entsprechenden LCH/SCH-Paare in einem ersten Kanal eines vorangehenden MAC-Rahmens ist.

**6.** Die MAC Protokoll-Datenstruktur nach Anspruch 1, wobei jedes einer zweiten Anzahl der SCH/LCH-Paare im zweiten Kanal einer nicht-zeitkritischen Verbindung zwischen der ersten und zweiten Kommunikationseinheit zugeordnet ist und wobei die zweite Anzahl der SCH/LCH-Paare der ersten Anzahl der SCH/LCH-Paare im zweiten Kanal vorangeht.

**7.** Die MAC Protokoll-Datenstruktur nach Anspruch 1, wobei jedes einer ersten Anzahl der LCH/SCH-Paare im ersten Kanal einer zeitkritischen Verbindung zwischen der ersten und zweiten Kommunikationseinheit zugeordnet ist und wobei jedes einer zweiten Anzahl der LCH/SCH-Paare im ersten Kanal einer nicht-zeitkritischen Verbindung zwischen der ersten und zweiten Kommunikationseinheit zugeordnet ist und wobei die zweite Anzahl der LCH/SCH-Paare der ersten Anzahl der LCH/SCH-Paare im ersten Kanal vorangeht.

**8.** Die MAC Protokoll-Datenstruktur nach einem der vorhergehenden Ansprüche, wobei die erste Kommunikationseinheit ein Zugangspunkt, im folgenden als AP (Englisch: Access Point) bezeichnet, ist, und wobei die zweite Kommunikationseinheit ein mobiles Endgerät, im folgenden als MT (Englisch: Mobile Terminal) bezeichnet, und wobei der erste Kanal ein Aufwärts-Verbindungkanal im folgenden als ULCH (Englisch: Uplink Channel) bezeichnet, ist und wobei der zweite Kanal ein Abwärtsverbindungskanal, im folgenden als DLCH (Englisch: Downlink Channel) bezeichnet, ist.

**9.** Die MAC Protokoll-Datenstruktur nach Anspruch 8, wobei der DLCH eine Vielzahl von SCH/LCH-Paaren umfasst, wobei jedes einer Vielzahl von Verbindungen zwischen dem AP und dem MT zugeordnet ist und wobei der ULCH eine Vielzahl von LCH/SCH-Paaren, von denen jedes einem verschiedenen aus der Vielzahl der Verbindungen zwischen dem AP und dem MT zugeordnet ist, umfasst.

**10.** Die MAC Protokoll-Datenstruktur nach Anspruch 9, wobei jedes der Vielzahl der LCH/SCH-Paare in der ULCH einem entsprechenden einen aus der Vielzahl der SCH/LCH-Paare in der DLCH zugeordnet ist, und wobei die Reihenfolge von jedem LCH/SCH-Paar in der ULCH die gleiche wie die Reihenfolge der entsprechenden SCH/LCH-Paare in der DLCH ist.

**11.** Die MAC Protokoll-Datenstruktur nach Anspruch 9, wobei jedes der Vielzahl der SCH/LCH-Paare in der DLCH einem entsprechenden einem aus einer Vielzahl der SCH/LCH-Paare in einer ULCH eines vorangehenden MAC-Rahmens zugeordnet ist, und wobei die Reihenfolge von jedem LCH/SCH-Paar in dem ULCH eines vorangehenden MAC-Rahmens die gleiche wie die Reihenfolge der entsprechenden SCH/LCH-Paare in dem DLCH ist.

**12.** Die MAC Protokoll-Datenstruktur nach Anspruch 9, wobei jedes aus einer ersten Anzahl der SCH/LCH-Paare in dem DLCH und jedes einer entsprechenden Anzahl von LCH/SCH-Paaren in dem ULCH einer verschiedenen zeitkritischen Verbindung zwischen dem MT und dem AP zugeordnet ist, und wobei jedes einer zweiten Anzahl der SCH/LCH-Paare in dem DLCH und jedes einer entsprechenden Anzahl von LCH/FCH-Paaren in dem ULCH einer verschiedenen nicht-zeitkritischen Verbindung zwischen dem MT und dem AP zugeordnet ist.

**13.** Die MAC Protokoll-Datenstruktur nach Anspruch 12, wobei die Reihenfolge der LCH/SCH-Paare in dem den zeitkritischen Verbindungen zugeordneten ULCH die gleiche wie die Reihenfolge der entsprechenden SCH/LCH-Paare in dem den zeitkritischen Verbindungen zugeordneten DLCH ist.

**14.** Die MAC Protokoll-Datenstruktur nach Anspruch 12, wobei die Reihenfolge der SCH/LCH-Paare in dem den zeitkritischen Verbindungen zugeordneten DLCH die gleiche wie die Reihenfolge einer entsprechenden Anzahl der LCH/SCH-Paare in einem ULCH eines vorhergehenden MAC-Rahmens ist.

**15.** Die MAC Protokoll-Datenstruktur nach Anspruch 12, wobei die LCH/SCH-Paare in dem den nicht-zeitkritischen Kanälen zugeordneten ULCH den LCH/SCH-Paaren in dem den zeitkritischen Verbindungen zugeordneten ULCH vorangeht.

**16.** Die MAC Protokoll-Datenstruktur nach Anspruch 12, wobei die SCH/LCH-Paare in dem den nicht-zeitkritischen Kanälen zugeordneten DLCH den SCH/LCH-Paaren in dem den zeitkritischen Verbindungen zugeordneten DLCH vorangeht.

**17.** Die MAC Protokoll-Datenstruktur nach Anspruch 12, wobei eine zeitkritische Verbindung eine Verzögerungserfordernis für erneutes Übertragen von Null (0) MAC Datenrahmen aufweist.

**18.** Die MAC Protokoll-Datenstruktur nach einem der Ansprüche 8 bis 17, wobei der LCH-Bereich (603) des Abwärtskanals dem SCH-Bereich (601) des Abwärtsverbindungskanals vorangeht und wobei der SCH-Bereich (605) des Aufwärtskanals dem LCH-Bereich (607) des Aufwärtskanals vorangeht.

## Revendications

**1.** Structure de données d'un protocole de Contrôle d'Accès au Support, désigné ci-après MAC (pour Medium Access Control), utilisable dans un réseau local (LAN) sans fil, dans lequel des données d'utilisateurs sont transportées entre une première entité de communication et une seconde entité de communication conformément à un protocole MAC, ladite structure de données comprenant :

un premier canal pour communiquer des informations de la première entité de communication à la seconde entité de communication, ledit premier canal contenant une pluralité de paires d'un canal long, appelé ci-après canal LCH (503), et d'un canal court, désigné ci-après canal SCH (501), dans laquelle chaque paire LCH/SCH est associée à une connexion correspondante entre les première et seconde entités de communication, chacune desdites paires LCH/SCH comportant une partie SCH pour acheminer des messages de Demande Automatique de Répétition, appelés ci-après ARQ (pour Automatic Repeat Request), et une partie LCH pour acheminer des données d'utilisateurs, et dans laquelle la partie LCH précède la partie SCH ; et
un second canal pour communiquer des informations de la seconde entité de communication à la première entité de communication, ledit second canal précédant le premier canal dans la structure de données de protocole MAC, ledit second canal contenant une pluralité de canaux SCH (505) dont chacun achemine un message ARQ de la seconde entité de communication à la première entité de communication.

**2.** Structure de données de protocole MAC selon la revendication 1, dans laquelle chacune d'un premier nombre des paires LCH/SCH dans ledit premier canal et chacun d'un premier nombre des canaux SCH (505) dans le second canal sont associés à une connexion prioritaire entre les première et seconde entités de communication.

**3.** Structure de données de protocole MAC selon la revendication 2, dans laquelle l'ordre dudit premier nombre de paires LCH/SCH dans le premier canal est identique à l'ordre dudit premier nombre de canaux SCH (505) correspondants dans le second canal.

**4.** Structure de données de protocole MAC selon la revendication 1, dans laquelle ledit second canal comprend en outre une pluralité de paires SCH/LCH, et dans laquelle chacune d'un premier nombre des paires SCH/LCH dans ledit second canal est associée à une connexion prioritaire entre les première et seconde entités de communication .

**5.** Structure de données de protocole MAC selon la revendication 4, dans laquelle l'ordre dudit premier nombre de paires SCH/LCH est identique à celui d'un premier nombre de paires LCH/SCH correspondantes dans un premier canal d'une trame MAC précédente.

**6.** Structure de données de protocole MAC selon la revendication 1, dans laquelle chacune d'un second nombre des paires SCH/LCH dans ledit second canal est associée à une connexion non prioritaire entre les première et seconde entités de communication, et dans laquelle le second nombre de paires SCH/LCH précède le premier nombre de paires SCH/LCH dans ledit second canal.

**7.** Structure de données de protocole MAC selon la revendication 1, dans laquelle chacune d'un premier nombre des paires LCH/SCH dans ledit premier canal est associée à une connexion prioritaire entre les première et seconde entités de communication, dans laquelle chacune d'un second nombre des paires LCH/SCH dans ledit premier canal est associée à une connexion non prioritaire entre les première et seconde entités de communication, et dans laquelle le second nombre de paires LCH/SCH précède le premier nombre de paires LCH/SCH dans ledit premier canal.

**8.** Structure de données de protocole MAC selon l'une quelconque des revendications précédentes, dans laquelle ladite première entité de communication est un Point d'Accès, appelé ci-après PA, et dans laquelle ladite seconde entité de communication est un Terminal Mobile appelé ci-après TM, dans laquelle ledit premier canal est un Canal Montant, appelé ci-après ULCH, et dans laquelle ledit second canal est un Canal Descendant, appelé ci-après DLCH.

**9.** Structure de données de protocole MAC selon la revendication 8, dans laquelle ledit canal DLCH comprend une pluralité de paires SCH/LCH, chacune associée à l'une d'une pluralité de connexions entre le PA et le TM, et dans laquelle ledit canal ULCH comprend une pluralité de paires LCH/SCH, chacune associée à l'une, différente, de la pluralité de connexions entre le PA et le TM.

**10.** Structure de données de protocole MAC selon la revendication 9, dans laquelle chacune de la pluralité de paires LCH/SCH dans le canal ULCH est associée à l'une, correspondante, de la pluralité de paires SCH/LCH dans le canal DLCH, et dans laquelle l'ordre de chaque paire LCH/SCH dans le canal ULCH est identique à l'ordre de la paire LCH/SCH correspondante dans le canal DLCH.

**11.** Structure de données de protocole MAC selon la revendication 9, dans laquelle chacune de la pluralité de paires SCH/LCH dans le canal DLCH est associée à l'une, correspondante, d'une pluralité de paires SCH/LCH dans un canal ULCH d'une trame MAC précédente, et dans laquelle l'ordre de chaque paire LCH/SCH dans le canal ULCH de la trame MAC précédente est identique à l'ordre de la paire SCH/LCH correspondante dans le canal DLCH.

**12.** Structure de données de protocole MAC selon la revendication 9, dans laquelle chacune d'un premier nombre des paires SCH/LCH dans ledit canal DLCH et chacune d'un nombre correspondant de paires LCH/SCH dans ledit canal ULCH sont associées à une connexion prioritaire différente entre le TM et le PA, et dans laquelle chacune d'un second nombre des paires SCH/LCH dans ledit canal DLCH et chacune d'un nombre correspondant de paires LCH/SCH dans ledit canal ULCH sont associées à une connexion non prioritaire différente entre le TM et le PA.

**13.** Structure de données de protocole MAC selon la revendication 12, dans laquelle l'ordre des paires LCH/SCH, dans le canal ULCH, qui sont associées aux connexions prioritaires est identique à l'ordre des paires SCH/LCH correspondantes, dans le canal DLCH, qui sont associées aux connexions prioritaires.

**14.** Structure de données de protocole MAC selon la revendication 12, dans laquelle l'ordre des paires SCH/LCH dans le canal DLCH, qui sont associées aux connexions prioritaires, est identique à l'ordre d'un nombre correspondant de paires LCH/SCH dans un canal ULCH d'une trame MAC précédente.

**15.** Structure de données de protocole MAC selon la revendication 12, dans laquelle les paires LCH/SCH dans le canal ULCH, qui sont associées aux canaux non prioritaires, précèdent les paires LCH/SCH, dans le canal ULCH, qui sont associées à des connexions prioritaires.

**16.** Structure de données de protocole MAC selon la revendication 12, dans laquelle les paires SCH/LCH dans le canal DLCH, qui sont associées à des canaux non prioritaires, précèdent les paires SCH/LCH, dans le canal DLCH, qui sont associées à des connexions prioritaires.

**17.** Structure de données de protocole MAC selon la revendication 12, dans laquelle une connexion prioritaire a une exigence de retard de transmission de zéro (0) trames de données MAC.

**18.** Structure de données de protocole MAC selon l'une quelconque des revendications 8 à 17, dans laquelle la partie LCH (603) dudit Canal Descendant précède la partie SCH (601) dudit Canal Descendant, et dans laquelle la partie SCH (605) dudit Canal Montant précède la partie LCH (607) dudit Canal Montant.

FIG. 1

FIG. 2

FIG. 3

EP 1 166 503 B1

| BCCH | FCCH | RFCH | DLCH | ULCH | RACH | BCCH | FCCH | RFCH | DLCH |

DECODE PDUs

UPDATE ARQ TABLE

GENERATE ARQ MESSAGES

FIG. 4

EP 1 166 503 B1

FIG. 5

| BCCH | FCCH | RFCH | ULCH | DLCH | RACH |

CONNECTION "B"

CONNECTION "B"

| SCH | -- | SCH | LCH | -- | LCH |

605    607

| LCH | -- | LCH | SCH | -- | SCH |

603    601

FIG. 6